# EUROPÄISCHE PATENTANMELDUNG

(11) **EP 4 321 948 A1**
(43) Veröffentlichungstag der Anmeldung: **14.02.2024**
(21) Anmeldenummer: 22189933.9
(22) Anmeldetag: 11.08.2022
(51) Int. Cl.: G05B 19/042

(54) **TEILEN VON GESAMMELTEN GERÄTEDATEN BEI FELDGERÄTEN**

(71) Anmelder: VEGA Grieshaber KG, 77709 Wolfach (DE)
(72) Erfinder: FAIST, Fridolin, 77709 Oberwolfach (DE); ZIMMERMANN, Florian, 78655 Dunningen (DE)
(74) Vertreter: Maiwald GmbH

(57) **Zusammenfassung**

Die vorliegende Erfindung betrifft ein Verfahren zum Teilen von gesammelten Gerätedaten bei Feldgeräten, wobei das Verfahren die folgenden Verfahrensschritte umfasst: geräteübergreifendes Abspeichern (S1) von Feldgerätedaten in Form von Parameter, Mess- oder Diagnosewerten auf einem Speichermedium eines gesicherten und mit dem Feldgerät gekoppelten Servers; selektives Freigeben (S2) von einer Untermenge der auf dem Speichermedium des gesicherten und mit dem Feldgerät gekoppelten Servers abgespeicherten Feldgerätedaten für einen externen Datenzugriff auf die freigegebene Untermenge der abgespeicherten Feldgerätedaten; und geräteübergreifendes Nutzen (S3) der freigegebenen Untermenge der abgespeicherten Feldgerätedaten als Unterstützung bei einer Serviceanfrage von einem Hersteller des Feldgerätes.

## Beschreibung

### Gebiet der Erfindung

Die vorliegende Erfindung betrifft das Teilen von gesammelten Gerätedaten bei Feldgeräten sowie ein Verfahren zum Teilen von gesammelten Gerätedaten mit der Supportabteilung des Geräteherstellers im Umfeld der Prozessautomation.

Insbesondere betrifft die vorliegende Erfindung ein Verfahren zum Teilen von gesammelten Gerätedaten bei Feldgeräten, ein entsprechendes Computerprogramm und ein entsprechendes Computerprogrammprodukt und ein entsprechendes Feldgerät sowie ein entsprechendes Füllstandsmessgerät.

### Hintergrund

Im Bereich der PC-Systeme und mobilen Geräte kennt man schon seit langem die Funktion, dass wenn eine App oder Anwendung abstürzt, vom Betriebssystem eine Aufforderung erfolgt, die gesammelten Fehlerdaten des Absturzes an den Hersteller der App bzw. der Anwendung weiterzuleiten. Die Daten werden typischerweise anonym weitergeleitet und können dann dem Hersteller zur Verbesserung seines Produktes dienen.

### Offenbarung der Erfindung

Es ist somit Aufgabe der Erfindung ein Verfahren vorzuschlagen, mit dem die Datenorganisation und -verwaltung eines Feldgerätes technisch verbessert wird.

Die Aufgabe wird durch ein Verfahren zum Teilen von gesammelten Gerätedaten bei Feldgeräten, ein entsprechendes Computerprogramm und ein entsprechendes Computerprogrammprodukt und ein entsprechendes Feldgerät sowie ein entsprechendes Füllstandsmessgerät gemäß den unabhängigen Patentansprüchen gelöst.

Die vorliegende Erfindung verbessert die Datenverarbeitung und das Datenmanagement von Feldgeräten.

Die vorliegende Erfindung umfasst Feldgeräte in der Form von Messgeräten verschiedenster Art, die im Feld verbaut sind. Die vorliegende Erfindung umfasst auch ein Füllstandsmessgerät ausgebildet als Feldgerät.

Die vorliegende Erfindung verbessert, dass Kunden von Feldgeräten, zu denen sie Inbetriebnahme-Daten in einem Cloudspeicher gesammelt haben, diese Daten mit einer Supportabteilung des Geräteherstellers teilen können.

Die hier vorliegende Erfindung bezieht sich auf Kunden von Feldgeräten in der Prozessindustrie. Feldgeräte wie z. B. Drucksensoren, Füllstandsensoren oder ähnliches müssen in aller Regel in der Anlage, in der sie eingebaut werden, an die baulichen und produktabhängigen Gegebenheiten angepasst werden.

Dies erfolgt durch Einstellen verschiedener Parameter. Einige Geräte verfügen darüber hinaus über Funktionen diese Einstellungen lokal, auf einem PC oder in einem Cloud-Dienst zu speichern um sie später auszuwerten und/oder zur Wiederherstellung eines Gerätezustandes zu verwenden.

Auch gibt es Geräte, die weitergehende Funktionen, wie einen autarken Messwertspeicher oder Funktionen zur Speicherung von Diagnosedaten Messwerten und Ereignisspeichern (Fehlerspeicher, Parameteränderungsspeicher, etc.) besitzen und auch hierbei Möglichkeiten haben, diese Informationen lokal auf einem PC oder Cloudbasiert zu speichern.

Ein solches System, das diese Daten auf einem PC und Cloudbasiert speichert, wird beispielsweise von der Firma VEGA mit dem sogenannten VEGA DataViewer angeboten.

Werden die Daten zusätzlich auf einem Cloud-basierten Speicher gesichert, so ist es erforderlich, dass diese je Kunde gekapselt vorliegen und dem jeweiligen Kunden nur die Daten der von ihm gekauften Geräte zugänglich sind. Auch für den Gerätehersteller müssen diese Daten verborgen bleiben.

Treten bei einem solchen Kunden bei der Inbetriebnahme oder im laufenden Betrieb Probleme mit einem Gerät auf und der Kunde nimmt die Hilfe der Supportabteilung des Geräteherstellers in Anspruch, so wäre es für die Supportabteilung hilfreich, wenn sie Einblick in die vom Kunden getätigten Einstellungen und gegebenenfalls weiterer gesammelter Daten des Gerätes hätte.

Gemäß der hier vorliegenden Erfindung hat der Kunde für den Zugriff auf seine Gerätedaten eine Management-Software die es neben anderen Funktionen ermöglicht, gesammelte Daten der Geräte in der Managementsoftware zu kennzeichnen und die gekennzeichneten Daten mit der Supportabteilung des Geräteherstellers zu teilen.

Die vorliegende Erfindung ermöglicht, eine Freigabe von ausgewählten, aufgezeichneten Feldgerätedaten für den Gerätehersteller als Unterstützung bei Serviceanfragen.

Die vorliegende Erfindung ermöglicht, eine einfachere und schnellere Hilfe durch aufgezeichnete und geteilte Feldgerätedaten.

Die vorliegende Erfindung ermöglicht, dadurch, dass die gleiche herstellereigene Cloud für die Aufzeichnung, Nutzung und Archivierung dann auch für den Service genutzt wird, dass die Daten bereits passend zur Darstellung und Nutzung durch den Service aufbereitet sind und nicht erneut aus einer Datei o.ä. ausgelesen, geprüft und interpretiert werden müssen.

Ein erster Aspekt der vorliegenden Erfindung betrifft ein Verfahren zum Teilen von gesammelten Gerätedaten bei Feldgeräten, wobei das Verfahren die folgenden Verfahrensschritte umfasst: geräteübergreifendes Abspeichern von Feldgerätedaten in Form von Parameter, Mess- oder Diagnosewerten auf einem Speichermedium eines gesicherten und mit dem Feldgerät gekoppelten Servers; selektives Freigeben von einer Untermenge der auf dem Speichermedium des gesicherten und mit dem Feldgerät gekoppelten Servers abgespeicherten Feldgerätedaten für einen externen Datenzugriff auf die freigegebene Untermenge der abgespeicherten Feldgerätedaten; und geräteübergreifendes Nutzen der freigegebenen Untermenge der abgespeicherten Feldgerätedaten als Unterstützung bei einer Serviceanfrage von einem Hersteller des Feldgerätes.

Vorteilhafte Ausgestaltungen sind Gegenstand der abhängigen Ansprüche sowie der nachfolgenden Beschreibung.

Gemäß einer Ausführungsform der Erfindung ist vorgesehen, dass das Feldgerät mit dem Server über ein Internet gekoppelt wird.

Gemäß einer Ausführungsform der Erfindung ist vorgesehen, dass eine Bedienoberfläche ausgebildet wird, welche dazu ausgebildet ist, die Feldgerätedaten in Form von Parameter, Mess- oder Diagnosewerten in einem Softwareprogramm zur Steuerung des Feldgerätes zu kennzeichnen und die gekennzeichneten Daten mit einer Supporteinrichtung des Herstellers des Feldgerätes zu teilen.

Gemäß einer Ausführungsform der Erfindung ist vorgesehen, dass der gesicherte und mit dem Feldgerät gekoppelte Server als Cloud-Server ausgebildet ist und das Speichermedium als cloudbasierter Speicher ausgebildet ist.

Gemäß einer Ausführungsform der Erfindung ist vorgesehen, dass für die Kopplung des Feldgeräts mit dem Server ein Computer zwischengeschaltet werden kann.

Gemäß einer Ausführungsform der Erfindung ist vorgesehen, dass für die Kopplung des Feldgeräts mit dem Server ein tragbarer Computer zwischengeschaltet werden kann.

Gemäß einem weiteren Aspekt der vorliegenden Erfindung wird ein Computerprogramm mit Programmcode zur Durchführung aller Verfahrensschritte nach dem ersten Aspekt oder einer beliebigen Ausführungsform des ersten Aspektes der vorliegenden Erfindung bereitgestellt, wenn das Computerprogramm in einem Computer ausgeführt wird.

Gemäß einem weiteren Aspekt der vorliegenden Erfindung wird ein Computerprogrammprodukt mit Programmcode zur Durchführung aller Verfahrensschritte nach dem ersten Aspekt oder einer beliebigen Ausführungsform des ersten Aspektes der vorliegenden Erfindung bereitgestellt, wobei das Computerprogrammprodukt direkt in den internen Speicher eines Rechners geladen werden kann und Softwarecodeabschnitte umfasst, mit denen die Schritte gemäß des Verfahrens nach dem ersten Aspekt oder einer beliebigen Ausführungsform des ersten Aspektes der vorliegenden Erfindung ausgeführt werden, wenn das Produkt auf einem Computer abläuft.

Gemäß einem weiteren Aspekt der vorliegenden Erfindung wird eine Bedienoberfläche für komplexe Berechnungen bereitgestellt, welche ein Verfahren nach dem ersten Aspekt oder einer beliebigen Ausführungsform des ersten Aspektes der vorliegenden Erfindung abrufbar macht.

Gemäß einem weiteren Aspekt der vorliegenden Erfindung wird ein Feldgerät bereitgestellt, welches bedient wird gemäß einem Verfahren nach dem ersten Aspekt oder einer beliebigen Ausführungsform des ersten Aspektes der vorliegenden Erfindung.

Gemäß einem weiteren Aspekt der vorliegenden Erfindung wird ein Füllstandsmessgerät bereitgestellt aufweisend ein Feldgerät nach dem vorhergehenden Aspekt oder einer beliebigen Ausführungsform des vorhergehenden Aspektes.

Im Folgenden werden mit Verweis auf die Figuren weitere Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

### Kurze Beschreibung der Figuren

- Die Fig. 1 zeigt: eine Darstellung eines Flussdiagrammes eines Verfahrens zum Teilen von gesammelten Gerätedaten bei Feldgeräten gemäß einer weiteren Ausführungsform der vorliegenden Erfindung;
- Die Fig. 2 zeigt: eine schematische Darstellung eines Feldgerätes mit einem gesicherten Server gemäß einer weiteren Ausführungsform der vorliegenden Erfindung;
- Die Fig. 3 zeigt: eine schematische Darstellung eines Feldgerätes mit einem gesicherten Server gemäß einer weiteren Ausführungsform der vorliegenden Erfindung;
- Die Fig. 4 zeigt: eine schematische Darstellung eines Feldgerätes mit einem gesicherten Server gemäß einer weiteren Ausführungsform der vorliegenden Erfindung;
- Die Fig. 5 zeigt: eine schematische Darstellung einer Bedienoberfläche eines Feldgerätes gemäß einer weiteren Ausführungsform der vorliegenden Erfindung;
- Die Fig. 6 zeigt: eine schematische Darstellung einer Bedienoberfläche eines Feldgerätes gemäß einer weiteren Ausführungsform der vorliegenden Erfindung;

### Detaillierte Beschreibung von Ausführungsformen

Im Folgenden erfolgt eine Beschreibung von Ausführungsbeispielen gemäß Ausführungsformen der Erfindung.

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Der Begriff "cloudbasiert", wie von der vorliegenden Erfindung verwendet kann wie folgt verstanden werden: Sind die Daten oder die Software nicht auf eigenen Servern installiert, sondern auf den Servern des Software-Herstellers, oder für die Bereitstellung der Software oder Daten Cloud-Infrastruktureinrichtung genutzt, ist es eine cloudbasierte Software bzw. cloudbasiert gespeicherte Daten. Unter "Cloud-basiert" sollte in der vorliegenden Erfindung folgendes zu verstehen sein: Das System funktioniert auf: Servern des Software-Herstellers, Public Clouds wie Azur, etc. In beiden Fällen müssen die Server entsprechend vom Software-Hersteller gewartet und auf aktuellem Stand gehalten werden

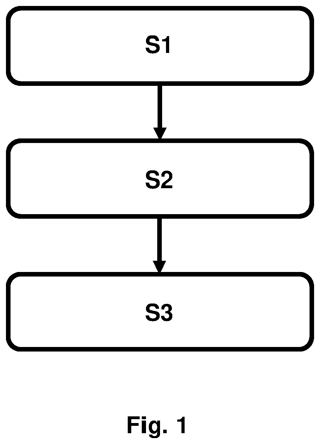

Die Fig. 1 zeigt eine Darstellung eines Flussdiagrammes eines Verfahrens zum Teilen von gesammelten Gerätedaten bei Feldgeräten gemäß einer weiteren Ausführungsform der vorliegenden Erfindung.

Als ein erster Verfahrensschritt erfolgt ein geräteübergreifendes Abspeichern S1 von Feldgerätedaten in Form von Parameter, Mess- oder Diagnosewerten auf einem Speichermedium eines gesicherten und mit dem Feldgerät gekoppelten Servers.

Als ein zweiter Verfahrensschritt erfolgt ein selektives Freigeben S2 von einer Untermenge der auf dem Speichermedium des gesicherten und mit dem Feldgerät gekoppelten Servers abgespeicherten Feldgerätedaten für einen externen Datenzugriff auf die freigegebene Untermenge der abgespeicherten Feldgerätedaten.

Als ein dritter Verfahrensschritt erfolgt ein geräteübergreifendes Nutzen S3 der freigegebenen Untermenge der abgespeicherten Feldgerätedaten als Unterstützung bei einer Serviceanfrage von einem Hersteller des Feldgerätes.

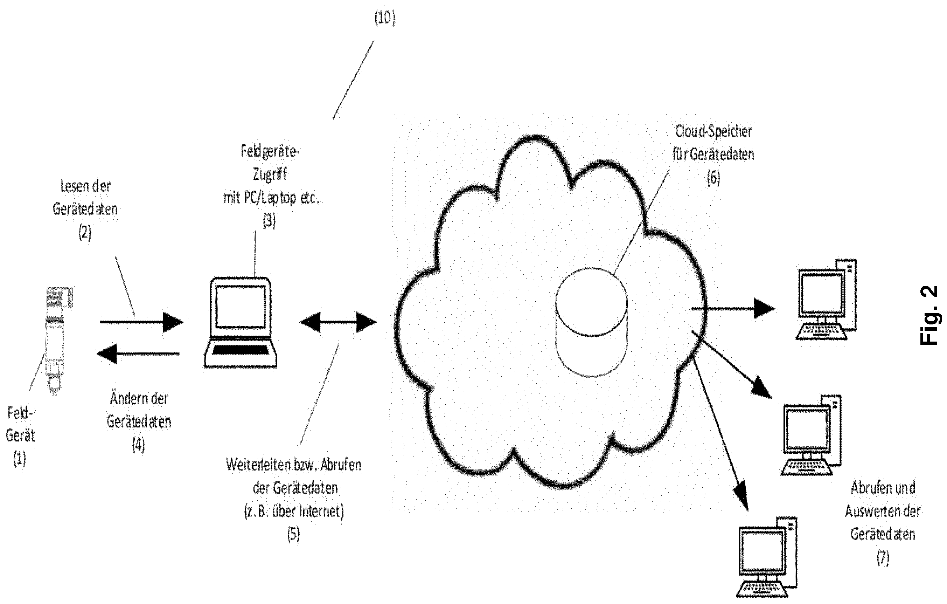

Die Fig. 2 eine schematische Darstellung eines Feldgerätes mit einem gesicherten Server gemäß einer weiteren Ausführungsform der vorliegenden Erfindung.

Eine Firma verwendet verschiedene Füllstandsensoren 1 in ihrer Anlage. Diese werden mithilfe einer Software (PACTware + DTM) beispielsweise über einen PC/Laptop 3 parametriert. Nach Abschluss dieser Inbetriebnahme wird ein Backup der Konfiguration sowie eine Dokumentation erstellt.

Diese werden nicht nur lokal auf dem PC/Laptop des jeweiligen Mitarbeiters, sondern gleichzeitig in der vom Gerätehersteller angebotenen Cloud 6 abgespeichert, sodass weitere Mitarbeiter der Firma auch auf diese Daten zugreifen können, wie in Fig. 2 über die verschiedenen PC's 7 dargestellt.

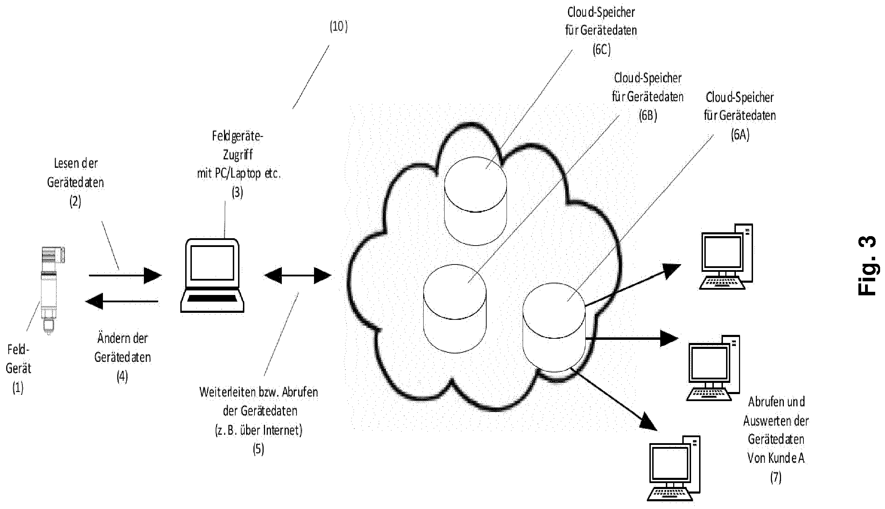

Die Fig. 3 zeigt eine schematische Darstellung eines Feldgerätes mit einem gesicherten Server gemäß einer weiteren Ausführungsform der vorliegenden Erfindung.

Gemäß Figur 3 kann der Cloud-Speicher auch für mehrere Kunden eingerichtet sein, so dass je Kunde entweder ein eigener Speicher oder zumindest ein eigener Speicherbereich vorgehalten wird. Es liefern also die Mitarbeiter aus Firma A Ihre Daten an Cloudspeicher 6A und wiederum haben nur Mitarbeiter der Firma A Zugriff zum Abrufen von Daten des Cloudspeicher 6A.

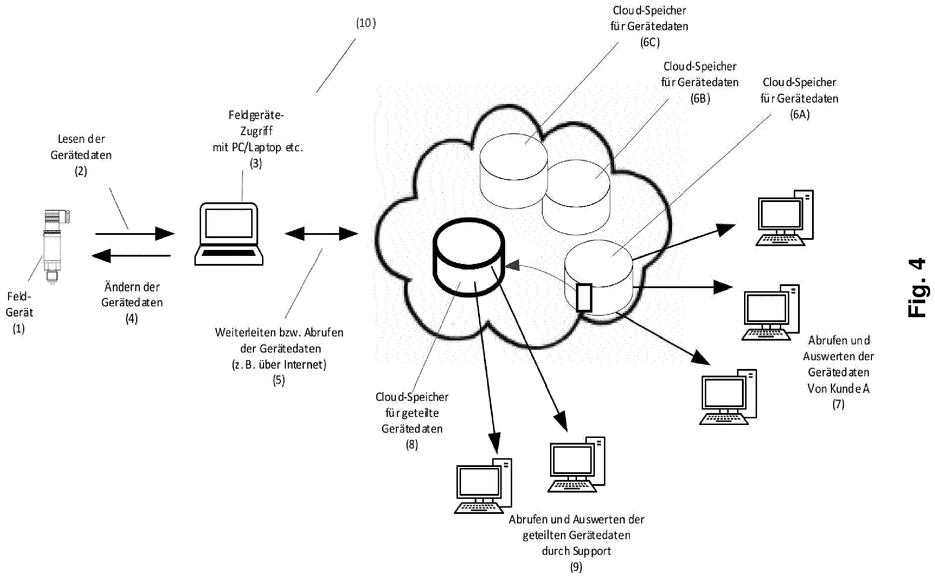

Die Fig. 4 zeigt eine schematische Darstellung eines Feldgerätes mit einem gesicherten Server gemäß einer weiteren Ausführungsform der vorliegenden Erfindung.

Gemäß Figur 4 kann ein Mitarbeiter von Kunde A im Bedarfsfall Teile oder die gesamten Gerätedaten aus Cloudspeicher 6A dem Gerätehersteller für Supportzwecke zugänglich machen. So ein Bedarfsfall könnte folgender Maßen entstehen.

Im Laufe der Zeit werden zusätzliche Daten, wie Mess- und Diagnosedaten von verschiedenen Mitarbeitern der Firma aufgezeichnet und in der Cloud gespeichert. Nach Beispielsweise einer Änderung am Prozess funktioniert die Messung nicht mehr zufriedenstellend und der Service der Herstellerfirma des Füllstandsensors wird kontaktiert.

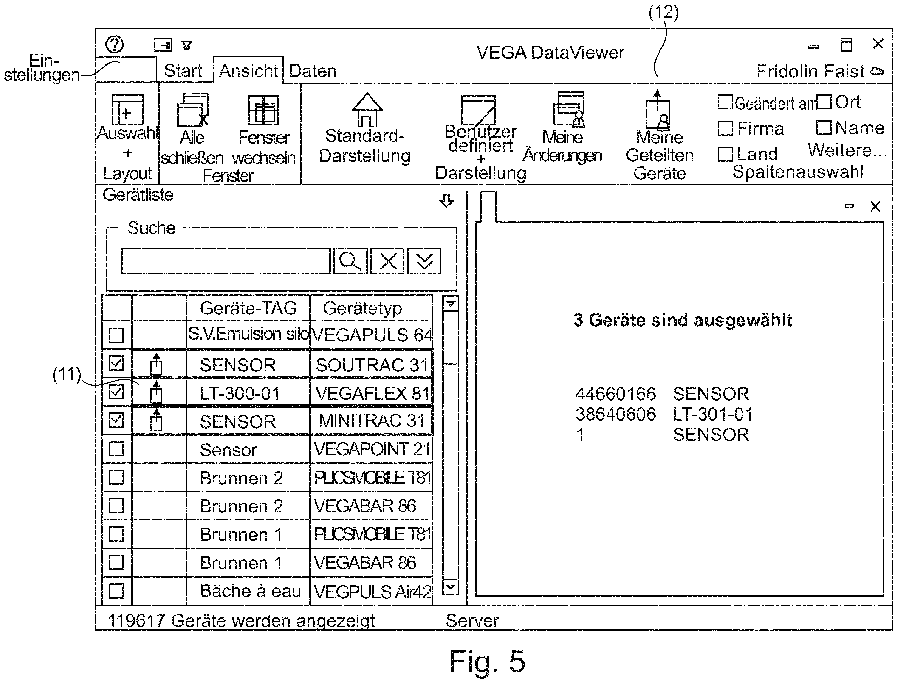

Die Fig. 5 zeigt eine schematische Darstellung einer Bedienoberfläche, siehe hierzu auch Fig. 4 Bezugszeichen 7, zum Abrufen und Auswerten der in der Cloud gespeicherten Daten gemäß einer weiteren Ausführungsform der vorliegenden Erfindung.

Um schnell einen Überblick über die Lage zu bekommen, kann nun ein Mitarbeiter die bisher aufgezeichneten und in der Cloud abgelegten Daten über die Managementsoftware für den Zugriff durch den Service des Sensorherstellers freigeben.

Hierzu könnte der Mitarbeiter entsprechende Geräte aus einer Liste auswählen und die Freigabe starten, wie etwa in Figur 5 mit Bezugszeichen 11 dargestellt. Mithilfe einer weiteren Kundenoption könnte eine längliche Liste von Geräten gefiltert werden, sodass nur die bereits freigegebenen Geräte angezeigt werden wie etwa in Figur 5 mit Bezugszeichen 12 dargestellt.

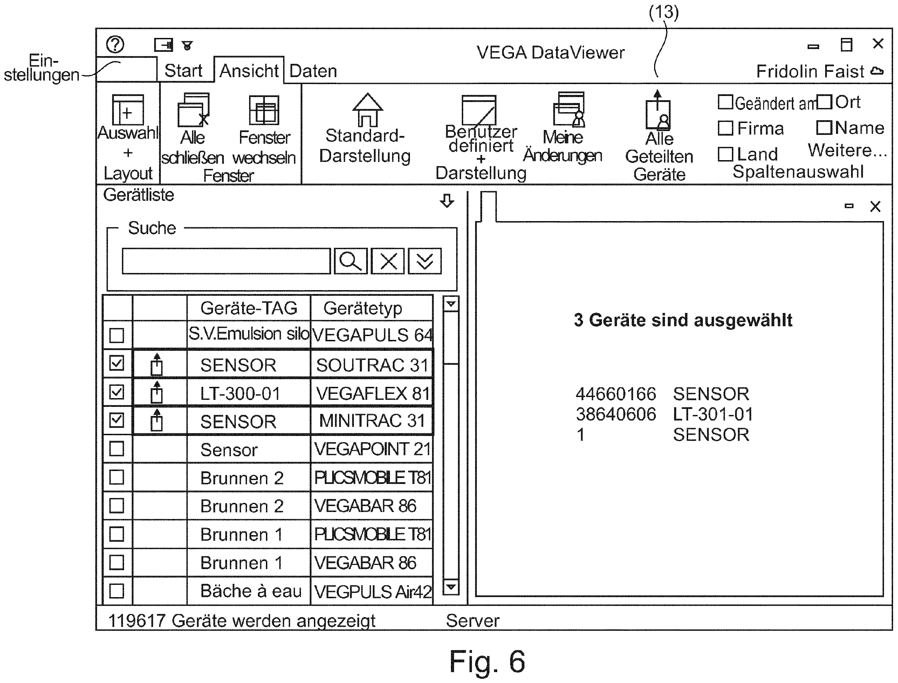

Die Fig. 6 zeigt eine schematische Darstellung einer Bedienoberfläche, siehe Fig. 4 Bezugszeichen 9, zum Abrufen und Auswerten des Cloud-Speichers für geteilte Daten gemäß einer weiteren Ausführungsform der vorliegenden Erfindung.

Auf Seiten des Geräteherstellers könnte ein Servicemitarbeiter die freigegebenen Daten einsehen ohne diese erneut aus händisch zugesendeten Dateien einzulesen, zu konvertieren oder anderweitig nochmal verarbeiten zu müssen. Für die Auswertung der Gerätedaten könnte er die gleiche Managementsoftware verwenden, wie der Kunde sie hat. Über entsprechende Filterfunktionen, wie in Figur 6 mit Bezugszeichen 13 dargestellt, wäre es außerdem denkbar, dass der Servicemitarbeiter diese freigegebenen Datensätze getrennt von eigenen Datensätzen darstellen kann.

Auch der Servicemitarbeiter der Herstellerfirma der Feldgeräte könnte für seine Service-Einsätze das gleich Gesamtsystem verwenden und seinerseits Daten zu seinen Einsätzen im Cloudspeicher sichern.

In einem solchen Szenario wäre es auch denkbar, dass er zu von Kunden geteilten Geräten bereits eigene Informationen gesammelt hat, und diese dann in seiner Managementsoftware zusammenführen kann.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zum Teilen von gesammelten Gerätedaten bei Feldgeräten, wobei das Verfahren die folgenden Verfahrensschritte umfasst:
- geräteübergreifendes Abspeichern (S1) von Feldgerätedaten in Form von Parameter, Mess- oder Diagnosewerten auf einem Speichermedium eines gesicherten und mit dem Feldgerät gekoppelten Servers;
- selektives Freigeben (S2) von einer Untermenge der auf dem Speichermedium des gesicherten und mit dem Feldgerät gekoppelten Servers abgespeicherten Feldgerätedaten für einen externen Datenzugriff auf die freigegebene Untermenge der abgespeicherten Feldgerätedaten; und
- geräteübergreifendes Nutzen (S3) der freigegebenen Untermenge der abgespeicherten Feldgerätedaten als Unterstützung bei einer Serviceanfrage von einem Hersteller des Feldgerätes.

2. Verfahren gemäß Anspruch 1, wobei das Feldgerät mit dem Server über ein Internet gekoppelt wird.

3. Verfahren gemäß Anspruch 1 oder 2, wobei eine Bedienoberfläche ausgebildet wird, welche dazu ausgebildet ist, die Feldgerätedaten in Form von Parameter, Mess- oder Diagnosewerten in einem Softwareprogramm zur Steuerung des Feldgerätes zu kennzeichnen und die gekennzeichneten Daten mit einer Supporteinrichtung des Herstellers des Feldgerätes zu teilen.

4. Verfahren gemäß einem der vorhergehenden Ansprüche, wobei der gesicherte und mit dem Feldgerät gekoppelte Server als Cloud-Server ausgebildet ist und das Speichermedium als Cloud-basierter Speicher ausgebildet ist.

5. Verfahren gemäß einem der vorhergehenden Ansprüche, wobei für die Kopplung des Feldgeräts mit dem Server ein Computer zwischengeschaltet werden kann.

6. Verfahren gemäß einem der vorhergehenden Ansprüche 1 bis 4, wobei für die Kopplung des Feldgeräts mit dem Server ein tragbarer Computer zwischengeschaltet werden kann.

7. Computerprogramm mit Programmcode zur Durchführung aller Verfahrensschritte nach einem der Ansprüche 1 bis 6, wenn das Computerprogramm in einem Computer ausgeführt wird.

8. Verwendung eines Computerprogramms nach Anspruch 7.

9. Datenträgersignal, das das Computerprogramm nach Anspruch 7 überträgt.

10. Computerprogrammprodukt, das direkt in den internen Speicher eines Rechners geladen werden kann und Softwarecodeabschnitte umfasst, mit denen die Schritte gemäß dem Verfahren nach einem der Ansprüche 1 bis 6 ausgeführt werden, wenn das Produkt auf einem Computer abläuft.

11. Computerlesbares Speichermedium, umfassend Befehle, die bei der Ausführung durch einen Computer diesen veranlassen, das Verfahren nach einem der Ansprüche 1 bis 6 ausgeführt werden.

12. Bedienoberfläche für ein Feldgerät, welche ein Verfahren gemäß einem der vorhergehenden Ansprüche 1 bis 6 abrufbar macht.

13. Verwendung einer Bedienoberfläche nach Anspruch 12.

14. Ein Feldgerät, welches gemäß den Verfahrensschritten des Verfahrens nach einem der Ansprüche 1 bis 5 bedient wird.

15. Ein Füllstandsmessgerät aufweisend ein Feldgerät nach Anspruch 14.
